# EUROPEAN PATENT SPECIFICATION

(11) **EP 1 278 218 B1**
(45) Date of publication and mention of the grant of the patent: **03.11.2004**
(21) Application number: 02014530.6
(22) Date of filing: 01.07.2002
(51) Int. Cl.: H01G 9/08, H01G 9/10, H01G 2/02, H01G 2/10

(54) **Cap for protecting and anchoring electrical capacitors**
Schutz- und Ankerabdeckung für elektrische Kondensatoren
Capuchon de protection et d'ancrage de condensateurs électriques

(30) Priority: 05.07.2001 IT MI20010373 U
(43) Date of publication of application: 22.01.2003
(73) Proprietor: DUCATI ENERGIA S.p.A., 40132 Bologna (IT)
(72) Inventor: Battistoni, Claudio, 40011 Anzola dell'Emilia (BO) (IT); Capponcelli, Moreno, 40128 Bologna (IT); Gurrieri, Claudio, 40134 Bologna (IT)
(74) Representative: Coloberti, Luigi

(56) References cited:
- EP-A- 0 691 664
- EP-A- 0 948 003
- WO-A-98/26436
- US-A- 3 458 645
- US-A- 3 943 412

## Description

### BACKGROUND OF THE INVENTION

This invention refers to the fastening of electrical capacitors to electrical apparatuses and appliances, and more particularly relates to a capacitor and a protective cap assembly according to claim 1.

As it is known, an industrial capacitor in general comprises a casing of metal, for example aluminium, or of plastic material, to house the electrical components of the capacitor, and may also be provided with a suitable protective cap for protecting the area of the contacts for connection to an electrical circuit.

In most applications it is also necessary to fasten the capacitor to appropriate structures or supporting members, by providing the same capacitor with anchoring means suitable for such purposes.

### STATE OF THE ART

Presently, the capacitors can be fastened to supporting structures in various different ways, for example by using appropriate straps for securing the capacitors to a surface of a supporting member, or by providing the casing of the capacitor with suitable anchoring means, variously shaped according to the specific requirements and/or requests of a user.

It is also well-known that the electrical capacitors in general may be provided with a protective cap made of aluminium, plastic material, or other suitable material, which has the purpose of protecting the area of the capacitor in which are located the electrical contacts for connection of the capacitor to an electrical circuit.

These caps usually consist of plain smooth covers devoid of any fastening system, which are simply press-fitted or snap-engaged onto the body of the capacitor; the caps are also provided with one or more passing-through holes for the connecting cables.

WO-A-98/26436 describes a cover for protecting the upper end of an electrical capacitor, provided with a mounting means for fastening the cover to a side wall. The cover has an inside diameter slightly larger that the outside diameter of the capacitor which is merely positioned between the cover and a support member at the bottom side. In more detail, the capacitor and cap assembly disclosed by WO 982 6436 comprises a cup-shaped casing having a rear and cyllindrical walls into which the capacitor is partially fitted; the cap comprises engageable and disengageable fastening means, e.g., of the slide type, integrally with the side-wall; and is provided with an vertical extending surface defining a vertical passageway for the passage of electrical conductors. EP-A-0.691 .664, US-A-3,458,645, EP-A-0.948.003 and US-A-3,943,412 refer to technological background in respect to the construction of capacitors and related fastening means.

Although the fastening systems currently in use are capable of satisfying a great majority of applications and requirements, there is nevertheless a need to have alternative fastening systems in order to satisfy new and different application requirements.

### OBJECTS OF THE INVENTION

The main object of this invention is to provide a capacitor and a protective cap assembly for electrical capacitors, whereby it is possible to make use of one or more integrated fastening means, in substitution of, or in combination with conventional fastening means already in use for the capacitors, so as to be able to satisfy numerous and/or diverse requirements of use, in an extremely quick and easy way.

A further object of the invention is to provide a cap for protecting and fastening electrical capacitors in plastic or metal material, which is of low cost and easy to manufacture, by means of different technologies.

### BRIEF DESCRIPTION OF THE INVENTION

All the above can be achieved by means of a capacitor and a protective cap assembly for electrical capacitors, according to claim 1.

The cap can be manufactured by injection moulding of plastic materials, or by any other suitable material, and can be provided with one or more anchoring devices or means integrated with the cap itself.

In particular, the fastening means can be in the form of an elastically yieldable tongue parallely extending to the side wall of the cap, or can comprise a snap-on fastening system, for quick connection into an appropriate aperture of a support or anchoring member.

These fastening means, suitably dimensioned and forming part of the cap, or integrated with the latter, make it possible to secure the cap-capacitor assembly without preventing the use of any other conventional fastening system already provided or used for fastening the casing of the capacitor.

By using a cap with an integrated fastening system according to this invention, it is consequently possible to fasten capacitors having a completely smooth aluminium casing, without the need to resort to particular supplementary fastening systems, such as plastic straps or the like.

According to a further aspect of the invention, the protective cap can also be provided with at least one hole in the rear wall or in the side wall, having a suitable shape and provided with an inwardly directed flexible lip, and a peripheral neck to provide a satisfactory seal, preventing excessive flexure of the electrical cable connected to the capacitor.

The cap can be made by injection moulding, as well as by other moulding technologies, either individual or in combination, suitable for the processing of the material used.

In addition to these, processing with machine tools, shearing, drawing, thermoforming, extrusion, rolling, welding, compression moulding, forging and/or pressure die-casting technologies can be used.

Consequently, the cap can be made with plastic materials or their derivatives, as well as with other materials suitable for manufacture and its use.

Among the others, metal materials such as aluminium or its alloys, copper or its alloys, thermosetting resins and/or rubber and/or its derivatives can be used.

Depending upon requirements, the cap can be provided with one or more integrated and differently shaped fastening or anchoring elements, such as a fastening tang, a snap-on coupling system, a screw-thread tang, slide-type coupling means, or pre-arranged surfaces for the application of a double-sided adhesive tape.

The cap can be connected to the capacitor by any fastening system, in addition to the conventional systems, for example by screwing, gluing, calking, riveting, crushing, welding and/or rolling.

### BRIEF DESCRIPTION OF THE DRAWINGS

These and further features of a capacitor and a cap assembly for protecting and fastening electrical capacitors, according to the invention, will be more clearly evident from the following description, with reference to the accompanying drawings, in which:
Fig. 1 shows a partial cutaway side view of a capacitor provided with a protective cap according to this invention;
Fig. 2 shows a side view along the line 2-2 of Fig. 1;
Fig. 3 shows a top view along the line 3-3 of Fig. 1;
Figs. 4, 5 and 6 show further embodiments of anchoring means for a protective cap of a capacitor, according to this invention.

### DETAILED DESCRIPTION OF THE INVENTION

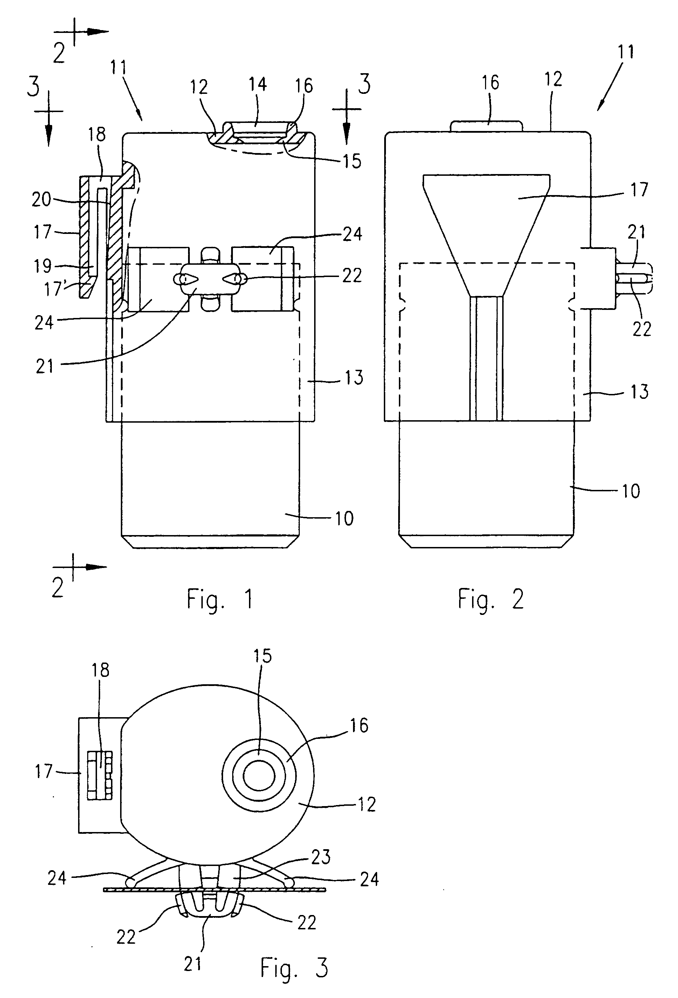

As shown in Figures 1-3, reference number 10 has been used to indicate a generic electrical capacitor which has been fitted with a protective cap 11.

The cap 11, in the example taken into consideration, comprises a rear wall 12 and a cylindrical side wall 13, which extends along the casing of the capacitor 10.

The rear wall 12 of the cap, in turn comprises a passing through hole 14 for the passage of an electric cable for connection of the capacitor 10 to an electric circuit; the hole 14 is provided with a sealing lip 15 radially protruding inside the same hole 14, having a shaped edge to provide a sealing against the outer sheathing of the cable; the rear wall 12 of the cap 11 is also provided with an annular rib 16 around the hole 14 which afford a supplemental watertight seal action and which prevent excessive flexure of the cable.

The cap 11 may also be provided with one or more anchoring or fastening means, two in the case shown, disposed on its side wall and/or on its rear wall.

More precisely, in the case shown, the cap 11 comprises a first anchoring means in the form of a triangular flat-shaped tongue member 17 which extends parallel to and spaced apart from the side wall 13 of the cap; the tongue 17 is provided with an aperture 18 at its upper end, for example a rectangular aperture aligned with facing guide surfaces 19, 20 longitudinally extending on the tongue member 17 and on the outer surface of the cap side wall, designed to engage with a coupling member of a support structure for the capacitor. As shown in figure 1, the guide surface 19 on the inner side of the tongue member 17, extends from the aperture 18 up to a short distance from the tip of the tongue 17, to form a retaining tooth 17'. Conversely the other guide surface 20 extends from the aperture 18 in a small slanted plane towards the end tip of the tongue 17.

In the example shown in Figures 1-3, the cap 11 is also provided with a second snap-on anchoring means, provided in an intermediate position of the side wall 13, angularly spaced at 90° of the previous anchoring tongue 17. The second anchoring means comprises a T-shaped coupling device 21, having rounded side arms, turned towards the side wall 13 of the cap. Each side arm is provided with an outer rib 22 to pass through corresponding slots in a shaped hole made in the structure or in a supporting member for the capacitor, to engage said shaped hole by turning the cap-condenser assembly of 90° around the shank of the T-shaped coupling device.

Disposed to the rear of the T-shaped head of the coupling device is a centering shoulder 23 comprising two elastically yieldable side tabs 24 designed to rest against the rear surface of the supporting structure or supporting element for the capacitor, to maintain the latter firmly preventing rotation and shaking of the same capacitor.

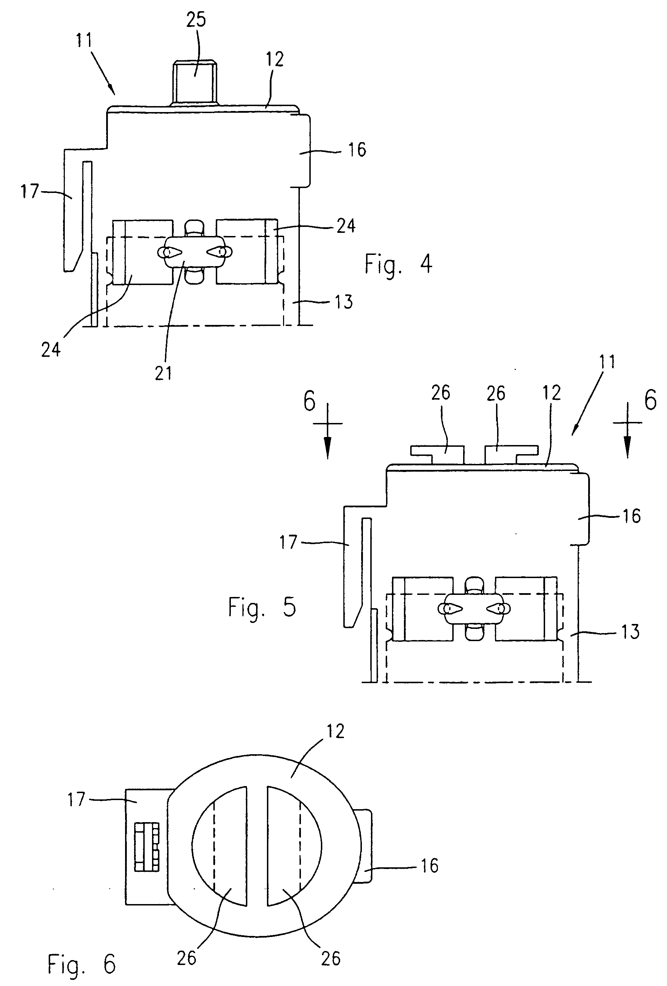

Fig. 4 of the accompanying drawings shows a second embodiment for the anchoring device in which use is again made of the anchoring tongue 17 as in the case of Fig. 1, and a threaded tang 25 coaxially arranged to the cap, protruding from the rear wall 12; reference 16 in Fig. 4 has again been used to indicate the annular rib around the hole for passage of the cable.

Figures 5 and 6 show, by way of example, a further embodiment according to which the cap 11 is again provided on the side wall 13 with the coupling tongue 17 of the previous example, and in which a slide-type coupling device has been provided on its rear wall 12, substantially comprising two opposite semicircular feet 26, each protruding outwards.

In the case shown in Figures 5 and 6, the hole for the passage of the cable with the annular rib 16 is made on the side wall 13 of the protective cap.

From what has been described and shown in the accompanying drawings, it will be evident that a protective cap for electrical capacitors has been provided, comprising integrated fastening means or devices, which can be used separately and/or in combination with similar or different fastening means normally used on capacitors of this kind.

For example, in place of, or in combination with, the previously described fastening means, it is possible to use a fork-shaped fastening or coupling element, or a snap-on type or other type of quick coupling system.

As mentioned previously, the fastening means or devices, as well as the materials and their characteristics, can be of any type and/or shape whatsoever, providing they fall within the scopes of the accompanying claims

## Claims

1. A capacitor and a protective cap assembly (10, 11) comprising:
- a capacitor (10);
- a protective cap comprising a cup-shaped casing (11) having a rear and cylindrical side walls (12, 13);
- wherein the capacitor (10) is partially fitted into and connected to the cup-shaped casing (11) of the assembly
- the cup-shaped casing (11) comprising engageable and disengageable fastening means integrally with at least one of said rear and/or side walls (12,13) of the casing (11) of the protective cap being provided for fastening the capacitor and cap assembly (10, 11) to a supporting structure; and
- a passing through hole (14) on the cap (11) for the passage of electrical conductors for connecting the capacitor (10);
- wherein the fastening means comprising differently shaped fastening devices (17; 21; 25; 26) on said rear and/or side walls (12, 13) of the cup-shaped casing (11) of the assembly; and
- wherein the passing through hole (14) for the passage of the electrical conductors comprises a flexible sealing lip (15) inwardly directed inside the same passing-through hole (14).

2. A capacitor and a protective cap assembly as claimed in claim 1, wherein said fastening means comprise tongue-type anchoring device (17).

3. A capacitor and a protective cap assembly as claimed in claim 2, wherein said anchoring device comprises a triangular-shaped tongue member (17) having a passing through hole (18) aligned with opposite longitudinal guide surfaces (19, 20) on the tongue member (17) and on the side wall (13) of the cap (11), said tongue member (17) being provided with an end retaining tooth (17').

4. A capacitor and a protective cap assembly as claimed in claim 1, wherein said fastening means comprise a snap-on coupling device (21).

5. A capacitor and a protective cap assembly as claimed in claim 4, wherein said snap-on coupling device (21) comprise a T-shaped member (21) having elastically yelding side arms (22), rearwardly oriented towards the protective cap (11), and elastically yelding side tabs (24) which extend on both sides of the snap-on coupling device (21).

6. A capacitor and a protective cap assembly as claimed in claim 1, wherein said fastening means comprise a threaded tang (25).

7. A capacitor and a protective cap assembly as claimed in claim 1, wherein said fastening means comprise slide-type coupling device (26).

8. A capacitor and a protective cap assembly as claimed in claim 1, wherein said cap (11) is made of plastic and/or metal material.

9. A capacitor and a protective cap assembly as claimed in claim 1, wherein said fastening means comprise an external surface arranged for application of a double-sided adhesive tape.

10. A capacitor and a protective cap assembly as claimed in any one of the preceding claims, wherein the cup-shaped casing (11) is provided with an annular rib (16) coaxially extending to said passing through hole (14).

## Patentansprüche

1. Kondensator- und Schutzkappen-Baueinheit (10, 11), mit:
- einem Kondensator (10);
- einer Schutzkappe, die ein becherförmiges Gehäuse (11) mit einer Rückwand und zylindrischen Seitenwänden (12, 13) aufweist;
- wobei der Kondensator (10) teilweise in das becherförmige Gehäuse (11) der Baueinheit eingesetzt und mit ihm verbunden ist;
- wobei das becherförmige Gehäuse (11) verbind- und lösbare Befestigungsmittel einteilig mit der Rückwand und/oder den Seitenwänden (12, 13) des Gehäuses (11) der Schutzkappe umfasst, die dazu vorgesehen sind, die Kondensator- und Kappenbaueinheit (10, 11) an einer Unterstützungsstruktur zu befestigen; und
- einem Durchgangsloch (14) in der Kappe (11) für den Durchgang elektrischer Leiter für ihre Verbindung mit dem Kondensator (10);
- wobei die Befestigungsmittel verschieden geformte Befestigungsvorrichtungen (17; 21; 25; 26) an der Rückwand und/oder den Seitenwänden (12, 13) des becherförmigen Gehäuses (11) der Baueinheit umfassen; und
- wobei das Durchgangsloch (14) für den Durchgang der elektrischen Leiter eine biegsame Dichtungslippe (15) umfasst, die innerhalb dieses Durchgangslochs (14) nach innen gerichtet ist.

2. Kondensator- und Schutzkappen-Baueinheit nach Anspruch 1, bei der die Befestigungsmittel eine zungenartige Verankerungsvorrichtung (17) umfassen.

3. Kondensator- und Schutzkappen-Baueinheit nach Anspruch 2, bei der die Verankerungsvorrichtung ein dreieckiges Zungenelement (17) umfasst, das ein Durchgangsloch (18) besitzt, das auf gegenüberliegende, longitudinale Führungsoberflächen (19, 20) des Zungenelements (17) und an der Seitenwand (13) der Kappe (11) ausgerichtet ist, wobei das Zungenelement (17) mit einem Endrückhaltezahn (17') versehen ist.

4. Kondensator- und Schutzkappen-Baueinheit nach Anspruch 1, bei der die Befestigungsmittel eine Einrast-Kopplungsvorrichtung (21) umfassen.

5. Kondensator- und Schutzkappen-Baueinheit nach Anspruch 4, bei der die Einrast-Kopplungsvorrichtung (21) ein T-förmiges Element (21) umfasst, das elastisch nachgebende Seitenarme (22) besitzt, die nach hinten zu der Schutzkappe (11) orientiert sind, und elastisch nachgebende Seitenansätze (24) besitzt, die sich beiderseits der Einrast-Kopplungsvorrichtung (21) erstrecken.

6. Kondensator- und Schutzkappen-Baueinheit nach Anspruch 1, bei der die Befestigungsmittel einen mit Gewinde versehenen Ansatz (25) umfassen.

7. Kondensator- und Schutzkappen-Baueinheit nach Anspruch 1, bei der die Befestigungsmittel eine gleiterartige Kopplungsvorrichtung (26) umfassen.

8. Kondensator- und Schutzkappen-Baueinheit nach Anspruch 1, bei der die Kappe (11) aus Kunststoff und/oder aus einem Metallwerkstoff hergestellt ist.

9. Kondensator- und Schutzkappen-Baueinheit nach Anspruch 1, bei der die Befestigungsmittel eine äußere Oberfläche umfassen, die so beschaffen ist, dass auf sie ein doppelseitiges Klebeband aufgebracht werden kann.

10. Kondensator- und Schutzkappen-Baueinheit nach einem der vorhergehenden Ansprüche, bei der das becherförmige Gehäuse (11) mit einer ringförmigen Rippe (16) versehen ist, die sich koaxial zu dem Durchgangsloch (14) erstreckt.

## Revendications

1. Ensemble (10, 11) condensateur et capuchon protecteur comprenant :
- un condensateur (10) ;
- un capuchon protecteur comprenant un boîtier en forme de tasse (11) ayant une paroi arrière et des parois latérales cylindriques (12, 13) ;
- dans lequel le condensateur (10) est partiellement logé dans et connecté au boîtier en forme de tasse (11) de l'ensemble ;
- le boîtier en forme de tasse (11) comprenant un moyen de fixation pouvant être engagé et dégagé, intégré à au moins l'une desdites parois arrière et/ou latérales (12, 13) du boîtier (11) du capuchon protecteur, et prévu pour fixer l'ensemble (10, 11) condensateur et capuchon protecteur sur une structure de support ; et
- un trou de passage (14) sur le capuchon (11) pour le passage de conducteurs électriques permettant la connexion au condensateur (10) ;
- dans lequel le moyen de fixation comprend des dispositifs de fixation de différentes formes (17 ; 21 ; 25 ; 26) sur lesdites parois arrière et/ou latérales (12, 13) du boîtier en forme de tasse (11) de l'ensemble ; et
- dans lequel le trou de passage (14) pour le passage de conducteurs électriques comprend une lèvre d'étanchéité souple (15) dirigée vers l'intérieur, dans ce même trou de passage (14).

2. Ensemble condensateur et capuchon protecteur selon la revendication 1, dans lequel ledit moyen de fixation comprend un dispositif d'ancrage du type à patte (17).

3. Ensemble condensateur et capuchon protecteur selon la revendication 2, dans lequel ledit dispositif d'ancrage comprend un élément en forme de patte triangulaire (17) comportant un trou de passage (18) aligné avec des surfaces de guidage longitudinales opposées (19, 20) prévues sur l'élément en forme de patte (17) et sur la paroi latérale (13) du capuchon (11), ledit élément en forme de patte (17) étant muni d'une dent (17') de retenue d'extrémité.

4. Ensemble condensateur et capuchon protecteur selon la revendication 1, dans lequel ledit moyen de fixation comprend un dispositif d'accouplement encliquetable (21).

5. Ensemble condensateur et capuchon protecteur selon la revendication 4, dans lequel ledit dispositif d'accouplement encliquetable (21) comprend un élément en forme de T (21) ayant des bras latéraux fléchissant de manière élastique (22), orientés en arrière vers le capuchon protecteur (11), et des branches latérales fléchissant de manière élastique (24) qui s'étendent de chaque côté du dispositif d'accouplement encliquetable (21).

6. Ensemble condensateur et capuchon protecteur selon la revendication 1, dans lequel ledit moyen de fixation comprend une queue filetée (25).

7. Ensemble condensateur et capuchon protecteur selon la revendication 1, dans lequel ledit moyen de fixation comprend un dispositif d'accouplement de type coulissant (26).

8. Ensemble condensateur et capuchon protecteur selon la revendication 1, dans lequel ledit capuchon (11) est fait de plastique et/ou d'un matériau métallique.

9. Ensemble condensateur et capuchon protecteur selon la revendication 1, dans lequel ledit moyen de fixation comprend une surface extérieure adaptée pour l'application d'un ruban adhésif double face.

10. Ensemble condensateur et capuchon protecteur selon l'une quelconque des revendications précédentes, dans lequel le boîtier en forme de tasse (11) est pourvu d'une nervure (16) qui s'étend de façon coaxiale audit trou de passage (14).
